Europäisches Patentamt

European Patent Office

Office européen des brevets

(19)

(11) **EP 0 901 706 B1**

(12) **EUROPEAN PATENT SPECIFICATION**

(45) Date of publication and mention
of the grant of the patent:
**13.08.2003   Bulletin 2003/33**

(51) Int Cl.$^7$: **H02K 3/40**, H02K 15/08

(21) Application number: **97925376.2**

(22) Date of filing: **27.05.1997**

(86) International application number:
**PCT/SE97/00908**

(87) International publication number:
**WO 97/045933 (04.12.1997 Gazette 1997/52)**

(54) **A METHOD AND A DEVICE FOR REDUCING THIRD HARMONIC PHENOMENA IN A ROTATING ELECTRIC ALTERNATING CURRENT MACHINE**

VERFAHREN UND VORRICHTUNG ZUR REDUZIERUNG DER AUSWIRKUNGEN VON OBERWELLEN DRITTEN GRADES IN EINER ROTIERENDEN WECHSELSTROMMASCHINE

PROCEDE ET DISPOSITIF DE REDUCTION DES PHENOMENES DE TROISIEME HARMONIQUE DANS UNE MACHINE TOURNANTE A COURANT ELECTRIQUE ALTERNATIF

(84) Designated Contracting States:
**AT BE CH DE ES FI FR GB IT LI NL SE**

(30) Priority: **29.05.1996   SE 9602079**
**03.02.1997   SE 9700335**
**03.02.1997   SE 9700347**

(43) Date of publication of application:
**17.03.1999   Bulletin 1999/11**

(73) Proprietor: **ABB AB**
**721 83 Västeras (SE)**

(72) Inventors:
• **LEIJON, Mats**
**S-723 35 Västeras (SE)**
• **BERGGREN, Bertil**
**S-723 46 Västeras (SE)**
• **GERTMAR, Lars**
**S-722 26 Västeras (SE)**
• **NYGEN, Jan-Anders**
**S-722 22 Västeras (SE)**

(74) Representative: **Dahlstrand, Björn**
**ABB Group Services Center AB**
**Legal & Compliance/Intellectual Property**
**721 78 Västeras (SE)**

(56) References cited:
**EP-A- 0 684 679**          **US-A- 2 241 832**
**US-A- 4 308 575**          **US-A- 4 551 780**
**US-A- 5 323 330**

**Description**

TECHNICAL FIELD

The present invention relates to a method and a device for reducing the influence of third harmonic voltages upon direct connection of alternating current machines to a three-phase power network, wherein one winding of the machine is Y-connected and the neutral point of the winding is accessible.

BACKGROUND ART, THE PROBLEM

A current with a frequency three times the mains frequency, hereinafter called the third harmonic, is generated in various ways in distribution and transmission networks, hereinafter termed jointly power network. This current arises partly as a result of third harmonic voltages generated by alternating current (AC) machines and in non-linear loads which excite third harmonic currents. The third harmonic current often causes problems, both for apparatus connected to the power network and for the apparatus actually generating the third harmonics. The third harmonics problem is often directly associated with how connected apparatus are grounded. The third harmonic current has the feature that its phase position is the same in all three phases. In other words, it behaves as a zero-sequence current. The fact that there are several different principles and regulations for grounding in power networks also means that the methods for reducing the influence of the third harmonic may differ greatly.

When calculating and designing three-phase AC machines, the aim is normally to achieve as symmetrical and sinusoidal quantities as possible. With respect to terminals the stator windings of the above-mentioned machines may, when being manufactured, be connected in many different ways. For some machines the stator windings are connected in $\Delta$, for others in Y-connection, where the so-called neutral point sometimes is not drawn out from the machine. For the machines concerned in this invention the three-phase winding is Y-connected and all of the winding ends including the neutral point are drawn out from the machine.

In order to obtain an economic yield from the electromagnetic circuit in common types of AC machines, a third-harmonic EMF is generated as a harmonic to the fundamental EMF. This third harmonic EMF may under certain conditions cause third harmonic currents to flow in the AC machine and in the power network.

It is well known that the chording of the stator winding may be chosen in order to eliminate one or more of the harmonics. It is also well known regarding synchronous AC machines with salient poles that, in addition, the shape of the EMF of these machines may be influenced and improved by choosing the design of the rotor poles and, especially, the shape of the pole shoes in an appropriate way.

A total elimination of the third harmonic of the voltage by choosing an appropriate size for the winding step however means a considerable reduction, approximately 14%, of the fundamental frequency voltage available for torque generation. This thus means only 86% utilization of the possible rated power. In order to avoid this reduction, the winding step is used mainly for suppression of the fifth harmonic whereby the reduction becomes only a few percent. Adaptation of the shape of the pole shoe is often used for a cost-effective reduction of the seventh harmonic voltage. Elimination or reduction of the harmful effects of the third-harmonic voltage/current must thus be performed by other methods.

When a generator is to be connected directly to an existing power network the grounding of the generator cannot normally be freely chosen due to the fact that this to some extent is determined by the grounding method of the existing power network. Concerning grounding, however, there are important criteria which should be fulfilled, namely:

- the power network may be directly grounded, resonance-grounded, ungrounded or high-impedance grounded

- a third-harmonic current through the generator as well as other equipment connected in the power network must for many reasons be limited

If the neutral point is connected to the ground of the power network by a relatively high-ohmic impedance for both the fundamental and the third component, increased voltages relative to ground may arise on the unfaulted phases in case of a ground fault. This cannot be accepted in certain power networks.

By connecting the neutral point directly, or via an appropriate impedance, to the ground of the power network, this will however allow the AC machine concerned to contribute to obtain appropriate magnitudes of the zero-sequence impedances to be able to handle the fault conditions, for example voltage increases on unfaulted phases, which may arise in the electrical system.

Traditionally, certain criteria should be fulfilled concerning the zero-sequence impedance $R_0 + jX_0$ and positive-sequence reactance $X_+$ of the systems. These criteria are often denoted as the following inequalities and state that

$$X_0/X_+ < 3 \text{ and } R_0/X_+ < 1$$

In other respects, these inequalities can be interpreted in such a way that in case of a ground fault in one phase, the voltage increase, in the unfaulted phases relative to ground, can be limited to 80%, which is an economical value from the point of view of insulation coordination, of what would have occurred if $X_0$ and/or $R_0 \to \infty$.

In order to satisfy the inequalities above it may, in some power networks, become necessary to ground the AC machine, being directly connected to the power network, by connection of a low-ohmic impedance between the neutral point and the ground of the power network.

The disadvantage with a low-ohmic impedance grounding or a direct connection of the neutral point to the ground of the power network is that, if the voltages contain a third harmonic, a third-harmonic current will start to flow in the phase conductor which closes its circuit through the ground and/or the neutral conductor. It can be mentioned that there are no regulations prohibiting such an arrangement and that there are such installations in operation.

Concerning low-voltage power networks, there are today in most networks third-harmonic currents which close their circuit through the neutral conductor and cause thermal as well as acoustic problems. These currents are caused by modem neon tubes, thyristor control and mains supply equipment causing uneven loading or chopping up the network voltage. The resultant interference, which has pronounced third harmonic character, affects other apparatus, produces power losses, which may cause harmful thermal heating, and may affect people who are sensitive to electricity. A number of methods are available to limit the damaging effect of third harmonic voltage and third harmonic currents.

A relatively usual method of grounding is to connect a high-ohmic resistance to a point in the power network. This resistance is always connected. This can be done with the aid of a Z/0-connected transformer connected to the power network. However, to obtain the necessary selective ground-fault protection, the resistance should be so dimensioned that at least 15 A ground-point current is obtained at full neutral point voltage.

Generators are usually connected to the power network via a $\Delta$/Y-0-connected step-up transformer. The main purpose of this transformer is to increase the voltage from generator level, typically in the range 10 - 20 kV, to the voltage of the power network which can be several hundred kV. The $\Delta$-winding of the transformer, which is connected to the generator, has the feature that it blocks third harmonic currents.

It is evident from the above that in order to both meet requirements on limiting over-voltages in case of ground faults, which in certain power networks may require low-impedance grounding of the AC machine directly connected to the power network, and requirements on reduction of third harmonic currents in normal operation, a device with relatively low fundamental frequency impedance and high third harmonic impedance would be desirable. Such a device is hereafter called a third harmonic suppression filter.

EP-A 684 679 discloses a suppression filter arrangement in a transmission network comprising a main transformer with a star point, phase leg conductors connected to the transformer, a neutral conductor connected to earth potential and to the star point of the transformer, and loads connected between the phase leg conductors and the neutral conductor. The loads are connected to the neutral connector at connection points. A bandstop filter, tuned at a center frequency 3f, f denoting the frequency of the transmitted energy, is connected between the star point of the transformer and the connection points of the loads.

The invention, described below, is primarily conceived for use, and its advantages will be particularly prominent, in an electric high voltage machine intended to be directly connected to a power network without intermediate step-up transformer.

Such generators with a rated voltage up to 36 kV is described by Paul R. Siedler, "36 kV Generators Arise from Insulation Research". Electric World, October 15, 1932, pp. 524-527. These generators comprise windings formed of cables wherein insulation is subdivided into various layers of different dielectric constants. The insulating material used is formed of various combinations of the three components of micafolium-mica, varnish and paper.

In a publication by Power Research Institute, EPRI, EL-3391, April 1984 a generator concept is proposed for providing such high voltages that the generator can be directly connected to a power network without any intermediate transformer. Such a generator was supposed to comprise a superconducting rotor. The magnetization capacity of the superconducting field would then make it possible to use air gap windings of sufficient thickness for withstanding the electric forces. The proposed stator is, however, of a complicated structure with a very thick insulation which considerably increases the size of the machine. In addition thereto special measures have to be taken for insulating and cooling the coil end sections.

## SUMMARY OF THE INVENTION, ADVANTAGES

In PCT application WO 9 745 288 a high voltage AC machine, intended for direct connection to the power network, is described. The winding of these machines consists of at least one current-carrying conductor, a first layer having semiconducting properties provided around said conductor, a solid insulating layer provided around said first layer, and a second layer having semiconducting properties provided around said insulating layer the voltage of the machine can be increased to such levels that the machines can be directly connected to any power network without an intermediate transformer. Thus this transformer can be omitted. Typical working range for these machines is 30 - 800 kV.

A third harmonic suppression filter, which is perfectly tuned, or sufficiently closed to perfectly tuned or the third harmonic is described in Swedish Patent number 510193 (see also WO 9 745 906 A). However, it may be difficult and/or expensive to accomplish such perfect tuning. If the filter is not sufficiently well tuned the filter may work well under a given operating condition of the network but a simple switching in the network may be sufficient for the filter to get into resonance with the network and the machine with regard to the third harmonic thus resulting in considerable third harmonic currents. These currents may also appear far out in the network.

The object of the present invention is to limit the third harmonic currents for various operating conditions of the power network without the need of a perfectly tuned third harmonic filter.

This object is achieved with a method and a device of the type described in the introduction and having the features defined in claims 1 and 10, respectively.

With the method and device as claimed in the invention, both machine and network are protected against damaging third harmonic currents during different operating conditions of the power network and the total third harmonic losses will be low.

According to an advantageous further development of the method according to the invention, the filter characteristic is altered through continuous control of the filter characteristic or through switching between a limited number of predetermined characteristics, such as between two different characteristics in the simplest form.

According to a second advantageous further development of the method according to the invention the third harmonic impedances of the filter and the network, including that of the alternating current machine are measured in order to determine when a risk of third harmonic resonance occurs. The filter characteristic can then be altered when, or a certain time before resonance occurs. It may be sufficient to measure the third harmonic impedance of the alternating current machine once and then make use of this measured value throughout. By measuring the impedance in this way, the filter characteristic can be switched with a certain hysteresis.

As previously mentioned, it may be difficult and/or expensive to tune the filter perfectly to the third harmonic such that the real part of the total filter impedance is sufficiently high to suppress the third harmonic current. A higher quality factor of the reactor will give a higher real part of the total filter impedance but it will also make it more difficult to tune the filter perfectly to the third harmonic. According to the invention, therefore a certain deliberate detuning or tuning error, lying within certain tolerances, is performed. According to an advantageous embodiment of the method according to the invention the tuning error is performed by altering the inductance and/or capacitance of the filter. A perfectly tuned filter is thus not necessary, and inexpensive components can be used.

According to an advantageous embodiment of the device as claimed in the invention, the filter includes a parallel resonance circuit comprising a first inductive element connected in parallel with a capacitive reactance, and connectable by a second inductive element. The impedance in this branch can then be tuned to a low value for the fundamental, whereas the third harmonic impedance will be sufficiently large.

## BRIEF DESCRIPTION OF THE DRAWINGS

The invention will now be explained in more detail with reference to the accompanying drawings in which Figure 1 shows a third harmonic-related equivalent circuit diagram for a generator, directly connected to the network, Figure 2 shows a third harmonic suppression filter connected between the neutral point of the alternating current machine and the ground point of the power network, Figures 3 and 4 show the imaginary part and the real part, respectively, of the filter impedance as a function of the detuning at two different quality factors QL, Figure 5 illustrates an example of switching of the filter characteristic as claimed in the invention, and Figures 6-10 show different examples of how the alteration of the characteristic of the suppression third harmonic filter can be realized as claimed in the invention.

## DESCRIPTION OF THE PREFERRED EMBODIMENTS

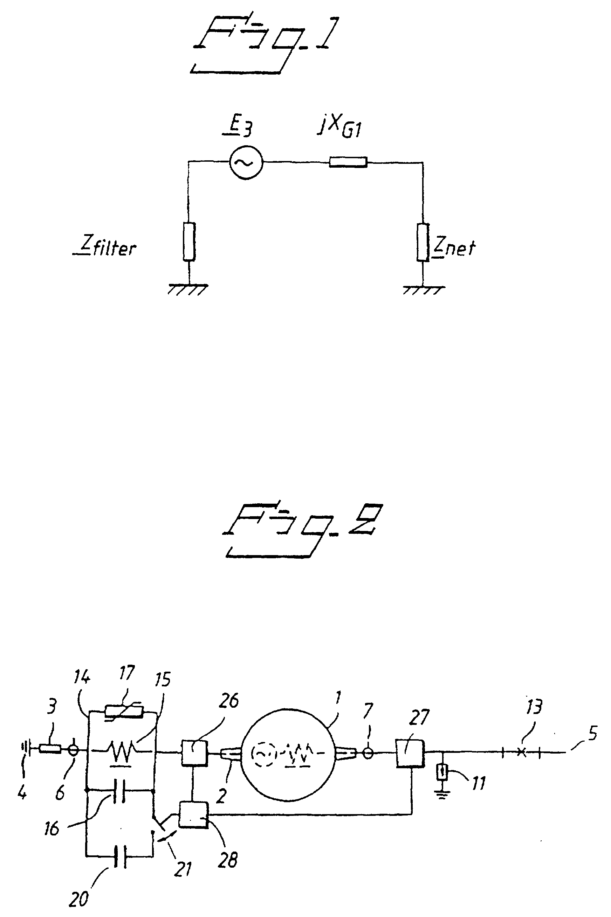

From the third harmonic aspect a generator connected directly to the power network, a third harmonic filter and the network can be reduced to the equivalent circuit in Figure 1, where $\underline{Z}_{filter}$ denotes the third harmonic impedance of the third harmonic filter, $\underline{E}_3$ the EMF of the generator, $jX_{G1}$ the third harmonic reactance of the generator and $\underline{Z}_{net}$ the third harmonic impedance of the power network. The underlining of the designations above indicates that the denoted quantities are complex. In this circuit the third harmonic current $\underline{I}$ will be

$$\underline{I} = \frac{\underline{E}_3}{\underline{Z}_{net} + \underline{Z}_{filter} + jX_{G1}} \tag{1}$$

The third harmonic current $\underline{I}$ shall be limited, i.e. the absolute value of the denominator in the equation above shall be made as large as possible. An expression of the absolute value of the denominator can be obtained as

$$\text{denominator} = \sqrt{(R_{filter}+R_{net})^2+(X_{filter}+X_{net}+X_{G1})^2} \tag{2}$$

where $R_{filter}$ and $R_{net}$ denote the resistance of the filter and the network, respectively and $X_{filter}$ and $X_{net}$ denote the reactance of the filter and the network, respectively.

Operating conditions may occur in the power network for which

$$X_{filter}+X_{net}+X_{G1} \approx 0 \tag{3}$$

In this case the third harmonic current I is only limited by $R_{filter}+R_{net}$ and the magnitude of the current can therefore be considerable if $R_{filter}$ is small.

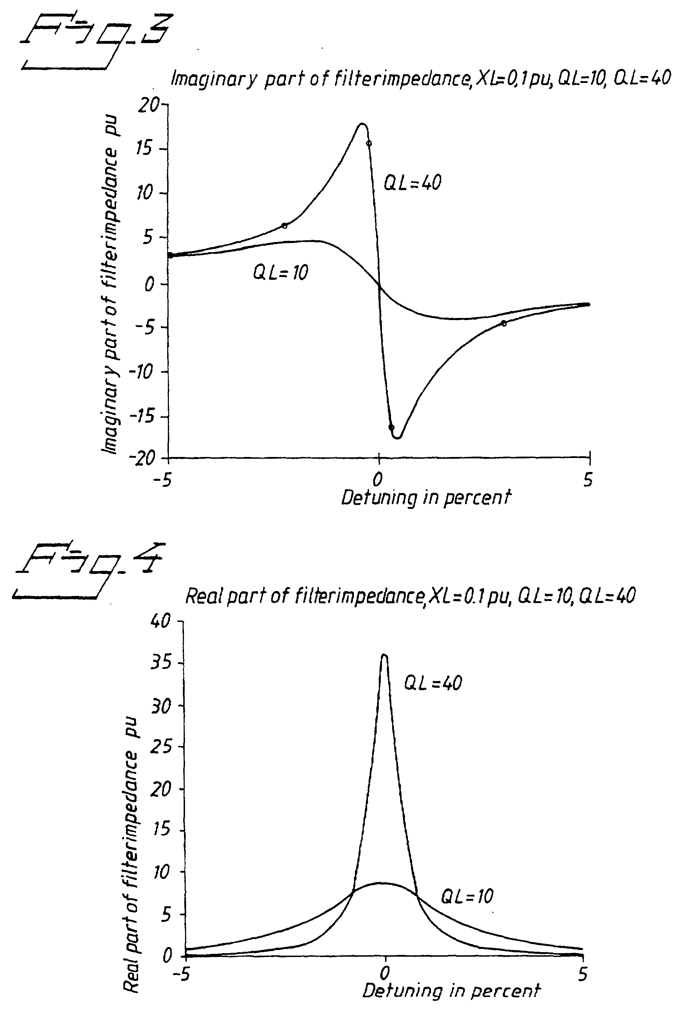

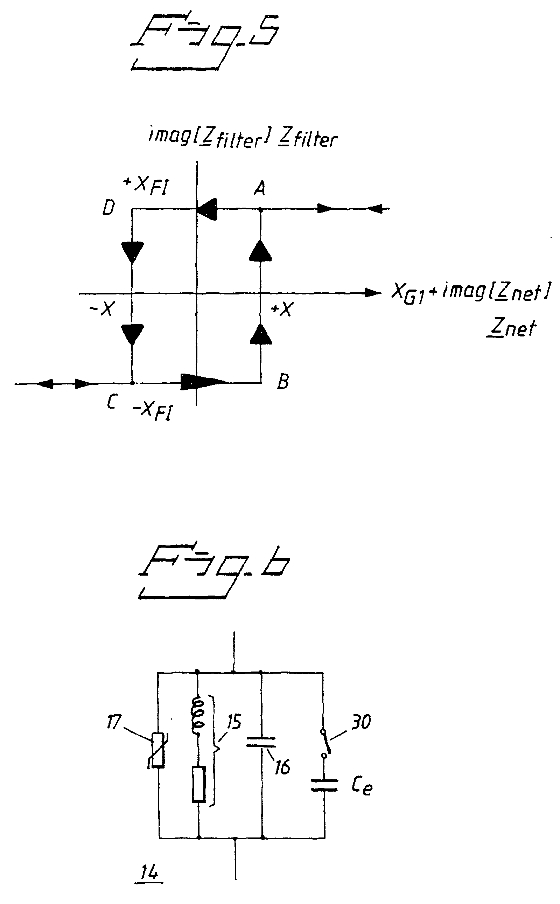

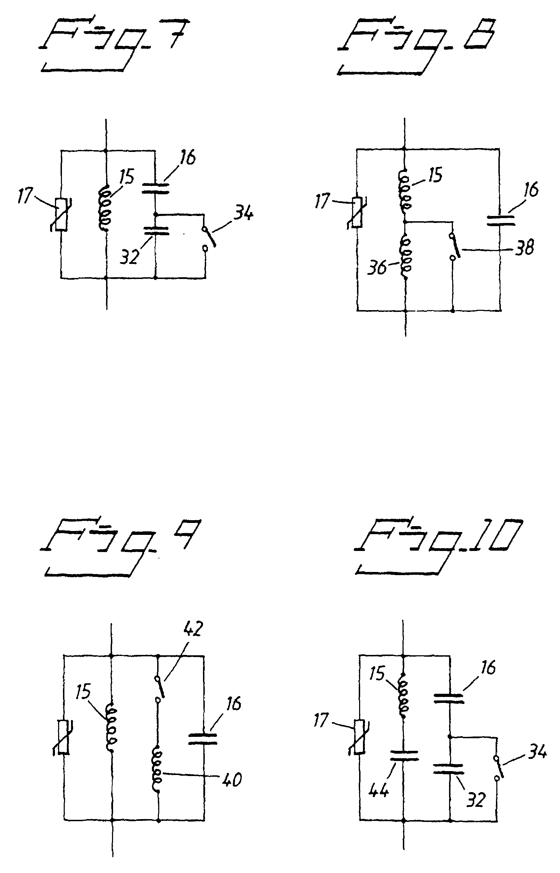

If the suppression third harmonic filter is tuned perfectly to the third harmonic the resistive part of the filter third harmonic impedance will be high and the third harmonic currents consequently low, i.e. $R_{filter}+R_{net}$ will be large in equation (2). However, such perfect tuning is difficult and an expensive solution, particularly if the quality factor QL is high. The detuning region within which the resistive part is large is then extremely narrow and it is then particularly difficult to tune the filter so as to be always at the top of the resonance, see Figure 4 showing the real part of the filter impedance as a function of the detuning for two quality factors QL of different sizes.

Equation (3) above implies that for certain operating conditions of the power network the imaginary part of the network third harmonic impedance and generator third harmonic impedance is equal to the imaginary part of the third harmonic filter impedance with the sign reversed, whereupon a third harmonic resonance arises between filter and network including generator.

The present invention utilizes a different mechanism, as compared to the perfectly tuned filter, for limiting the third harmonic current upon direct connection of alternating current machines to power networks by introducing a deliberate tuning error of the filter, within allowable tolerances, and by altering the filter characteristics if there is a tendency for third harmonic resonance between the filter, the machine and the network due to changing network operating conditions. Equation (3) above is thus not fulfilled and the sum of the relevant reactances is always different from 0. Thus, instead of using a perfectly tuned filter for the third harmonic, the sign of the imaginary part of the filter impedance is changed as necessary. Inexpensive filters and other components can therefore be used as claimed in the invention in order to limit the third harmonic currents in a satisfactory manner.

The imaginary part of the third harmonic impedance of the filter 24 is shown in Figure 3 for two different quality factors, QL, of the reactor as a function of the detuning. As can be seen the filter third harmonic reactance is inductive for negative detuning and capacitive for positive detuning of the filter. As claimed in the invention, the filter characteristic is altered by providing means for switching between positive and negative detuning. If the equivalent third harmonic reactance of the network is inductive, then the filter is given an inductive reactance, and vice versa if the network is capacitive. Equation (3) is thus never fulfilled and third harmonic resonance between the filter, the machine and the network is avoided. Consequently, the third harmonic currents are suppressed.

Figure 2 shows a suppression filter 14 connected between the neutral point 2 in a Y-connected alternating current machine 1, such as a generator, and the ground point 4 of the power network, possibly via a low-ohmic resistor 3. The phase voltages of the generator 1 are connected directly to the network 5 via a breaker and disconnectors 13.

The filter 14 in Figure 2 includes a parallel resonance circuit comprising a reactor 15 in parallel with a capacitor 16 and an additional capacitor 20 which can be connected. An over-voltage protection device 17 is also connected over the parallel resonance circuit 14. Measuring units 26 and 27 are also provided on the down and up side of the generator 1 to measure third harmonic voltage, third harmonic current and the phase angle between them in order to determine the imaginary part of the third harmonic impedance of the power network 5 and of the generator 1 in a control unit 28 and, depending on the measured impedance values, alter the filter characteristic when necessary by connecting or disconnecting the capacitor 20. This will be described in more detail in conjunction with alternative embodiments of the third harmonic suppression filter.

Current measuring means 6, 7 and an over-voltage protection device 11 on the supply side of the generator 1 are also shown in Figure 2.

Besides limiting the third harmonic current in normal operation, the filter 14 shall also limit over-voltages in case of ground faults in the power network by providing a low-ohmic impedance grounding for the neutral point 2 of the generator 1.

A high quality factor QL can also be achieved by introducing an active compensation in the resonance circuit, e.g. in the inductor branch or in the capacitor branch, in order to compensate for resistive third harmonic losses in the reactor 15 and capacitor 16.

The filter characteristic is suitably altered when the imaginary part of the third harmonic impedances of the filter and the power network together with the generator acquire different signs, before third harmonic resonance occurs. To achieve this the third harmonic impedances of power network 5 and the generator 1 are measured by measuring units 26 and 27, see Figure 2, in order to determine when the imaginary part changes sign. This measurement comprises measuring third harmonic voltage, third harmonic current and the phase angle between them. It may possibly be sufficient to measure the generator impedance only once and use this value thereafter.

The control unit 28 should be so constructed that the changing or switching of the filter characteristic occurs with a certain hysteresis. Otherwise breakers such as breaker 21, for instance, for connecting and disconnecting inductances and capacitance may switch on and off a large number of times when the imaginary part of the power network together with the generator third harmonic impedance is in the vicinity of the switching level.

The switching process is illustrated in Figure 5 showing the plane produced by the imaginary parts of the generator together with power network third harmonic impedance and the imaginary part of the suppression filter third harmonic impedance, respectively. If such switchings occur in the power network, so that its third harmonic reactance moves from the inductive side towards the capacitive side, the control unit 28 is designed to switch the filter from the inductive side to the capacitive side at a predetermined negative switching level -X of the imaginary part of the third harmonic impedance measured in the network together with the generator, at point D in the Figure. The filter is switched from a certain tuning error which gives the positive imaginary part $+X_{FI}$, to an approximately equally large negative imaginary part $-X_{FI}$, from point D to point C. This filter is thus switched from inductive characteristic to capacitive characteristic.

If, instead, the network moves from the capacitive side towards the inductive side, i.e. from negative imaginary part towards positive, the control unit 28 is arranged to switch the filter from capacitive characteristic to inductive characteristic at a predetermined switching level +X of the imaginary part of the measured third harmonic impedance for the generator together with the power network, at point B in the Figure. In this case the filter is switched from level $-X_{FI}$, to level $+X_{FI}$, at point A.

The filter characteristic can be changed in a number of ways. One example is shown in Figure 6 in which an extra capacitor $C_e$ is connected in with the aid of the control unit 28 when necessary, in order to alter the tuning error of the filter and thus its characteristic. The capacitor $C_e$ can be connected and disconnected by means of a breaker 30 controlled by the control unit 28.

Figure 7 shows an alternative embodiment of the suppression filter with a capacitor 32, connectable and disconnectable, in series with the capacitor 16. Connection and disconnection occurs with the aid of the breaker 34, controlled from the control unit 28 in Figure 2.

Figure 8 shows yet another alternative embodiment of the filter, in which an extra inductor 36 can be connected in series with the reactor 15 with the aid of the breaker 38, similarly controlled from the control unit 28. This can also be realized with a tap changer on the reactor 15 to connect and disconnect a part of the reactor.

Figure 9 shows an embodiment in which an extra inductance 40 can be connected in parallel with the reactor 15 and capacitor 16 with the aid of the breaker 42 controlled from the control unit 28.

Figure 10 shows a further embodiment in which an additional capacitor 44 is connected in series with the reactor 15. Altering of the filter characteristic is achieved by connecting and disconnecting the capacitor 32 in analog manner as in the embodiment as claimed in Figure 7. Connecting an extra capacitor in series with the reactor 15 in this way offers the advantage that the filter impedance for the third harmonic becomes higher and the impedance for the fundamental zero sequence becomes lower.

The other embodiments described above can also be modified in analog manner by connecting an extra capacitor in series with the reactor.

The suppression filter in the present invention can be provided with an over-voltage protection device. In the embodiments described this is shown as a separate component. However, the over-voltage protection can also be realized by allowing the reactor filter to go into saturation.

Other variations of the suppression filter are naturally possible in order to realize the invention, as are also different variants of active filters.

**Claims**

1. A method for reducing the influence of third harmonic voltages upon direct connection of alternating current machines (1) to a three-phase power network (5), wherein at least one winding of the machine is Y-connected and the neutral point (2) of the winding is available, **characterized in that** a third harmonic suppression filter (14) is connected between the neutral point (2) and the ground point (4) of the power network ((5), and **in that** the characteristic of the filter is altered so that the imaginary part of the filter third harmonic impedance ($X_{filter}$) has the same sign as that of the imaginary part of the third harmonic impedance of the network together with the alternating current machine ($X_{net} + X_{G1}$).

2. A method as claimed in claim 1, **characterized in that** alteration of the filter characteristic occurs through continuous control of the filter characteristic.

3. A method as claimed in claim 1, **characterized in that** alteration of the filter characteristic occurs through switching between a limited number of predetermined filter characteristics.

4. A method as claimed in any of claims 1-3, **characterized in that** the filter is detuned so that it is high-ohmically reactive as regards the third harmonic.

5. A method as claimed in any of claims 1-4, **characterized in that** the third harmonic impedances of the filter and the network, including that of the alternating current machines, are measured in order to determine when a risk of third harmonic resonance occurs.

6. A method as claimed in claim 5, **characterized in that** the filter characteristic is altered when, or a certain time before, the sum of the imaginary part of the third harmonic impedances of the network, and the alternating current machine changes sign in relation to the imaginary part of the third harmonic impedance of the filter.

7. A method as claimed in any of claims 1-6, **characterized in that** the filter characteristic is altered by alteration of the filter inductance andlor capacitance.

8. A method as claimed in any of claims 1-7, **characterized In that** the fundamental frequency impedance of the filter can be assigned any size.

9. A method as claimed in any of claims 1-8, **characterized in that** the filter is equipped with a protection device for over-voltages.

10. A device for reducing the influence of third harmonic voltages upon direct connection of alternating current machines (1) to a three-phase power network (5), wherein at least one winding of the machine is Y-connected and the neutral point (2) of the winding is available, **characterized in that** a third harmonic suppression filter (14) is arranged between the neutral point (2) and the ground point (4) of the power network (5); altering means (20, 21; 30, $C_e$; 32, 34; 36, 38; 40, 42) are provided to alter the characteristic of the filter (14); a measuring unit (26, 27) is provided to determine the imaginary part of the third harmonic impedance of the power network together with the alternating current machine ($X_{net}+X_{G1}$) to determine when, or a predetermined time before, the imaginary part of the third harmonic impedance of the power network together with the alternating current machine ($X_{net} + X_{G1}$) changes sign, as an indication of a risk that the filter will get into third harmonic resonance with the power network together with the machine and to provide a control signal accordingly to a control unit (28), the control unit (28) being arranged to control the altering means to alter the filter characteristic so that the imaginary part of the third harmonic impedance ($X_{filter}$) has the same sign as that of the imaginary part of the third harmonic impedance of the power network and the alternating current machine ($X_{net} +X_{G1}$).

11. A device as claimed in claim 10, **characterized in that** the fundamental frequency impedance of the filter can be assigned any size.

12. A device as claimed in claims 10 or 11, **characterized in that** the filter is equipped with a protection device (17) for over-voltages.

13. A device as claimed in any of claims 10-12, **characterized in that** the filter includes a parallel resonance circuit comprising a first inductive element and connectable second inductive element.

**14.** A device as claimed in claim 13, **characterized in that** the altering means include said second inductive element, which can be connected in series with said first inductive element.

**15.** A device as claimed in any of claims 10-12, **characterized in that** the filter includes a parallel resonance circuit comprising a first inductive element connected in parallel with a capacitive reactance, and **in that** the altering means include a second inductive element which can be connected in parallel with said first inductive element.

**16.** A device as claimed in any of claims 10-12, **characterized in that** the filter includes a parallel resonance circuit comprising an inductive element connected in parallel with a capacitive reactance, and **in that** the altering means include a first capacitor which can be connected in parallel with said the parallel resonance circuit.

**17.** A device as claimed in any of claims 10-12 or claim 16, **characterized in that** the filter includes a parallel resonance circuit comprising an inductive element connected in parallel with a capacitive reactance, and **in that** the altering means include a second capacitor which can be connected in series with the capacitive reactance.

**18.** A device as claimed in any of claims 10-17, wherein the filter includes a parallel resonance circuit comprising an inductive element connected in parallel with a capacitive reactance, **characterized in that** the altering means include a third capacitor which can be connected in series with the inductive element.

**Patentansprüche**

**1.** Verfahren zur Verringerung des Einflusses von Spannungen von dritten Harmonischen auf eine direkte Verbindung von Wechselstrommaschinen (1) an ein Dreiphasen-Leistungsnetz (5), wobei mindestens eine Wicklung der Maschine Y-verbunden ist und der Neutralpunkt (2) der Wicklung verfügbar ist, **dadurch gekennzeichnet, dass** ein Sperrfilter (14) für dritte Harmonische zwischen dem Neutralpunkt (2) und dem Erdpunkt (4) des Leistungsnetzes (5) verbunden ist, und dass die Charakteristik des Filters derart geändert wird, dass der Imaginärteil der Filterimpedanz von dritten Harmonischen ($X_{Filter}$) das gleiche Vorzeichen wie das des Imaginärteils der Impedanz von dritten Harmonischen des Netzes zusammen mit der Wechselstrommaschine ($X_{Netz} + X_{G1}$) aufweist.

**2.** Verfahren nach Anspruch 1, **dadurch gekennzeichnet, dass** eine Änderung der Filter-Charakteristik durch eine ununterbrochene Steuerung der Filter-Charakteristik erfolgt.

**3.** Verfahren nach Anspruch 1, **dadurch gekennzeichnet, dass** eine Änderung der Filter-Charakteristik durch ein Schalten zwischen einer begrenzten Anzahl an vorbestimmten Filter-Charakteristika erfolgt.

**4.** Verfahren nach einem der Ansprüche 1-3, **dadurch gekennzeichnet, dass** das Filter derart verstimmt ist, dass es hinsichtlich der dritten Harmonischen hochohmig reaktiv ist.

**5.** Verfahren nach einem der Ansprüche 1-4, **dadurch gekennzeichnet, dass** die Impedanzen von dritten Harmonischen des Filters und des Netzes, einschließlich jener der Wechselstrommaschinen, erfasst werden, um zu bestimmen, wann eine Gefahr einer Resonanz von dritten Harmonischen auftritt.

**6.** Verfahren nach Anspruch 5, **dadurch gekennzeichnet, dass** die Filter-Charakteristik geändert wird, wenn, oder eine bestimmte Zeit bevor, die Summe des Imaginärteils der Impedanzen von dritten Harmonischen des Netzes und der Wechselstrommaschine das Vorzeichen in Bezug auf den Imaginärteil der Impedanz von dritten Harmonischen des Filters ändert.

**7.** Verfahren nach einem der Ansprüche 1-6, **dadurch gekennzeichnet, dass** die Filter-Charakteristik durch Änderung der Filter-Induktanz und/oder Kapazitanz geändert wird.

**8.** Verfahren nach einem der Ansprüche 1-7, **dadurch gekennzeichnet, dass** der Grundfrequenz-Impedanz des Filters irgendeine Größe zugewiesen werden kann.

**9.** Verfahren nach einem der Ansprüche 1-8, **dadurch gekennzeichnet, dass** das Filter mit einer Schutzvorrichtung für Überspannungen ausgestattet ist.

**10.** Vorrichtung zur Verringerung des Einflusses von Spannungen von dritten Harmonischen auf eine direkte Verbindung von Wechselstrommaschinen (1) an ein Dreiphasen-Leistungsnetz (5), wobei mindestens eine Wicklung der Maschine Y-verbunden ist und der Neutralpunkt (2) der Wicklung verfügbar ist, **dadurch gekennzeichnet, dass** ein Sperrfilter (14) für dritte Harmonische zwischen dem Neutralpunkt (2) und dem Erdpunkt (4) des Leistungsnetzes (5) angeordnet ist; Änderungsmittel (20, 21; 30, $C_e$; 32, 34; 36, 38; 40, 42) bereitgestellt sind, um die Charakteristik des Filters (14) zu ändern; eine Erfassungseinheit (26, 27) bereitgestellt ist, um den Imaginärteil der Impedanz von dritten Harmonischen des Leistungsnetzes zusammen mit der Wechselstrommaschine ($X_{Netz}+X_{G1}$) zu bestimmen, um zu bestimmen wenn, oder eine vorbestimmte Zeit bevor, der Imaginärteil der Impedanz von dritten Harmonischen des Leistungsnetzes zusammen mit der Wechselstrommaschine ($X_{Netz} + X_{G1}$) das Vorzeichen ändert, als eine Angabe einer Gefahr, dass das Filter in eine Resonanz von dritten Harmonischen mit dem Leistungsnetz zusammen mit der Maschine gelangen wird, und um entsprechend ein Steuersignal an eine Steuereinheit (28) bereitzustellen, wobei die Steuereinheit (28) zum Steuern der Änderungsmittel zum Ändern der Filter-Charakteristik angeordnet ist, derart dass der Imaginärteil der Impedanz von dritten Harmonischen ($X_{Filter}$) das gleiche Vorzeichen wie das des Imaginärteils der Impedanz von dritten Harmonischen des Leistungsnetzes und der Wechselstrommaschine ($X_{Netz} + X_{G1}$) aufweist.

**11.** Vorrichtung nach Anspruch 10, **dadurch gekennzeichnet, dass** der Grundfrequenz-Impedanz des Filters irgendeine Größe zugewiesen werden kann.

**12.** Vorrichtung nach Anspruch 10 oder 11, **dadurch gekennzeichnet, dass** das Filter mit einer Schutzvorrichtung (17) für Überspannungen ausgestattet ist.

**13.** Vorrichtung nach einem der Ansprüche 10-12, **dadurch gekennzeichnet, dass** das Filter einen Parallelschwingkreis enthält, der ein erstes induktives Element und ein anschließbares zweites induktives Element umfasst.

**14.** Vorrichtung nach Anspruch 13, **dadurch gekennzeichnet, dass** die Änderungsmittel das zweite induktive Element enthalten, die in Reihe mit dem ersten induktiven Element geschaltet sein können.

**15.** Vorrichtung nach einem der Ansprüche 10-12, **dadurch gekennzeichnet, dass** das Filter einen Parallelschwingkreis enthält, der ein parallel zu einer kapazitiven Reaktanz geschaltetes, erstes induktives Element umfasst, und dass die Änderungsmittel ein zweites induktives Element enthalten, das parallel zu dem ersten induktiven Element geschaltet sein kann.

**16.** Vorrichtung nach einem der Ansprüche 10-12, **dadurch gekennzeichnet, dass** das Filter einen Parallelschwingkreis enthält, der ein parallel zu einer kapazitiven Reaktanz geschaltetes, induktives Element umfasst, und dass die Änderungsmittel eine erste Kapazität enthalten, die parallel zu dem Parallelschwingkreis geschaltet sein kann.

**17.** Vorrichtung nach einem der Ansprüche 10-12 oder Anspruch 16, **dadurch gekennzeichnet, dass** das Filter einen Parallelschwingkreis enthält, der ein parallel zu einer kapazitiven Reaktanz geschaltetes, induktives Element umfasst, und dass die Änderungsmittel eine zweite Kapazität enthalten, die in Reihe mit der kapazitiven Reaktanz geschaltet sein kann.

**18.** Vorrichtung nach einem der Ansprüche 10-17, worin das Filter einen Parallelschwingkreis enthält, der ein parallel zu einer kapazitiven Reaktanz geschaltetes, induktives Element umfasst, **dadurch gekennzeichnet, dass** die Änderungsmittel eine dritte Kapazität enthalten, die in Reihe mit dem induktiven Element geschaltet sein kann.

## Revendications

**1.** Procédé pour diminuer l'influence de tensions de troisième harmonique lors de la connexion directe de machines (1) à courant alternatif à un réseau (5) de puissance triphasé, dans lequel au moins un enroulement de la machine est connecté en Y et le point neutre (2) de l'enroulement est disponible, **caractérisé en ce qu'**un filtre (14) de suppression du troisième harmonique est connecté entre le point (2) neutre et le point (4) à la terre du réseau (5) de puissance, et **en ce que** la caractéristique du filtre est modifiée de sorte que la partie imaginaire de l'impédance ($X_{filtre}$) de filtre de troisième harmonique a le même signe que celui de la partie imaginaire de l'impédance de troisième harmonique du réseau ensemble avec la machine ($X_{net} + X_{G1}$) à courant alternatif.

**2.** Procédé suivant la revendication 1, **caractérisé en ce que** la modification de la caractéristique du filtre a lieu par une commande en continu de la caractéristique du filtre.

3. Procédé suivant la revendication 1, **caractérisé en ce que** la modification des caractéristiques du filtre a lieu par commutation entre un nombre limité de caractéristiques de filtre déterminées à l'avance.

4. Procédé suivant l'une quelconque des revendications 1 à 3, **caractérisé en ce que** filtre est désaccordé, de sorte qu'il est réactif à des valeurs ohmiques élevées en ce qui concerne la troisième harmonique.

5. Procédé suivant l'une quelconque des revendications 1 à 4, **caractérisé en ce que** les impédances de troisième harmonique du filtre et du réseau, en incluant celles des machines à courant alternatif, sont mesurées afin de déterminer quand un risque de résonance de troisième harmonique peut avoir lieu.

6. Procédé suivant la revendication 5, **caractérisé en ce que** la caractéristique du filtre est modifiée lorsque la somme de la partie imaginaire des impédances de troisième harmonique du réseau et de la machine à courant alternatif change de signe par rapport à la partie imaginaire de l'impédance de troisième harmonique du filtre ou bien à un certain temps avant cela.

7. Procédé suivant l'une quelconque des revendications 1 à 6, **caractérisé en ce que** la caractéristique de filtre est modifiée par modification de l'inductance de filtre et/ou de la capacité du filtre.

8. Procédé suivant l'une quelconque des revendications 1 à 7, **caractérisé en ce que** l'impédance de fréquence fondamentale du filtre peut recevoir n'importe quelle valeur.

9. Procédé suivant l'une quelconque des revendications 1 à 8, **caractérisé en ce que** le filtre est muni d'un dispositif de protection pour les surtensions.

10. Dispositif pour diminuer l'influence de tension de troisième harmonique lors de la connexion directe de machine (1) à courant alternatif à un réseau (5) de puissance triphasé, dans lequel au moins un enroulement de la machine est connecté en Y, et le point neutre (2) de l'enroulement est disponible, **caractérisé en ce qu'**un filtre (14) de suppression de troisième harmonique est disposé entre le point (2) neutre et le point (4) à la terre du réseau (5) de puissance, des moyens (20, 21 ; 30, $C_e$ ; 32, 34 ; 36, 38 ; 40, 42) de modification sont prévus pour modifier la caractéristique du filtre (14) ; une unité (26, 27) de mesure est prévue pour déterminer la partie imaginaire de l'impédance de troisième harmonique du réseau de puissance ensemble avec la machine ($X_{net} + X_{G1}$) à courant alternatif pour déterminer quand la partie imaginaire de l'impédance de troisième harmonique du réseau de puissance ensemble avec la machine à courant alternatif ($X_{net} + X_{G1}$) change de signe, ou bien un instant déterminé à l'avance, en tant qu'indication d'un risque que le filtre va se trouver dans une résonance de troisième harmonique avec le réseau de puissance ensemble avec la machine et pour fournir un signal de commande conformément à une unité (28) de commande, l'unité (28) de commande étant disposée pour commander les moyens de modification pour modifier la caractéristique de filtre, de sorte que la partie imaginaire de l'impédance ($X_{filtre}$) de troisième harmonique a le même signe que celui de la partie imaginaire de l'impédance de troisième harmonique du réseau de puissance et de la machine à courant alternatif ($X_{net} + X_{G1}$).

11. Dispositif suivant la revendication 10, **caractérisé en ce que** l'impédance de fréquence fondamentale du filtre peut avoir n'importe quelle valeur.

12. Dispositif suivant l'une quelconque des revendications 10 ou 11, **caractérisé en ce que** le filtre est muni d'un dispositif (17) de protection pour vis-à-vis des surtensions.

13. Dispositif suivant l'une quelconque des revendications 10 à 12, **caractérisé en ce que** le filtre comporte un circuit résonance parallèle comportant un premier élément inductif et un deuxième élément inductif pouvant être reliés.

14. Dispositif suivant la revendication 13, **caractérisé en ce que** les moyens de modification comportent le deuxième élément inductif, qui peut être connecté en série avec le premier élément inductif.

15. Dispositif suivant l'une quelconque des revendications 10 à 12, **caractérisé en ce que** le filtre comporte un circuit résonance parallèle comportant un premier élément inductif relié en parallèle à une réactance capacitive, et **en ce que** les moyens de modification comportent un deuxième élément inductif qui peut être connecté en parallèle avec le premier élément inductif.

16. Dispositif suivant l'une quelconque des revendications 10 à 12, **caractérisé en ce que** le filtre comporte un circuit de résonance parallèle comportant un élément inductif connecté en parallèle avec une réactance capacitive, et **en ce que** les moyens de modification comportent un premier condensateur qui peut être connecté en parallèle avec le circuit de résonance parallèle.

17. Dispositif suivant l'une quelconque des revendications 10 à 12 ou 16, **caractérisé en ce que** le filtre comporte un circuit de résonance parallèle comportant un élément inductif relié en parallèle à une réactance capacitive, et **en ce que** les moyens de modification comportent un deuxième condensateur qui peut être connecté en série à la réactance capacitive.

18. Dispositif suivant l'une quelconque des revendications 10 à 17, dans lequel le filtre comporte un circuit de résonance parallèle comportant un élément inductif relié en parallèle à une réactance capacitive, **caractérisé en ce que** les moyens de modification comportent un troisième condensateur qui peut être connecté en série avec l'élément inductif.

*Fig. 1*

$$\underline{E}_3 \qquad jX_{G1}$$

$$\underline{Z}_{filter} \qquad \qquad \underline{Z}_{net}$$

*Fig. 2*

_Fig.3_

Imaginary part of filterimpedance, XL=0,1pu, QL=10, QL=40

_Fig.4_

Real part of filterimpedance, XL=0.1 pu, QL=10, QL=40

Fig.5

Fig.6

Fig. 7

Fig. 8

Fig. 9

Fig. 10